# EUROPÄISCHE PATENTANMELDUNG

(11) **EP 1 761 041 A1**
(43) Veröffentlichungstag der Anmeldung: **07.03.2007**
(21) Anmeldenummer: 05018710.3
(22) Anmeldetag: 29.08.2005
(51) Int. Cl.: H04N 5/232, H04N 5/225

(54) **Digitale Filmkamera**

(71) Anmelder: Gerd Stueckler, 83684 Tegernsee (DE)
(72) Erfinder: Gerd Stueckler, 83684 Tegernsee (DE)
(74) Vertreter: Kudlek, Franz Thomas

(57) **Zusammenfassung**

Die Erfindung betrifft eine elektronische Filmkamera mit zumindest einem optoelektronischen Bildsensor und einer Bildsensor-Steuerung, wobei die Bildsensorsteuerung den Bildsensor so steuert, dass dieser jeweils während eines der Bildrate entsprechenden Zeitabschnitts statt einem Bild nacheinander zwei oder mehr Zwischenbilder erzeugt, welche mit gleicher oder aber auch unterschiedlicher Bildbereichsgröße, Bildpunkteanzahl, Belichtungsdauer, Helligkeitsverstärkung, Zwischenbild-Bildrate, etc. aufgenommen werden können und wobei einzelne und/oder mehrere dieser Zwischenbilder zu jeweils einem Ergebnis-Bild verarbeitet werden, welche dann den weiteren Einrichtungen der Kamera zur Aufzeichnung, Sucheranzeige etc. zur Verfügung stehen.

## Beschreibung

Die Erfindung betrifft eine digitale Filmkamera nach dem Oberbegriff des Patentanspruchs 1.

Beschrieben wird eine digitale Filmkamera mit zumindest einem optoelektronischen Bildsensor, welcher digitale Bilddaten für die Aufzeichnung des aufzunehmenden Bildausschnitts und für die Anzeige eines Sucherbildes liefert. Derartige Filmkameras weisen unter anderem eine Kamerasteuerungseinheit und eine Bildsensor-Signalverarbeitungseinheit auf, mit welchen für die Aufzeichnung und Anzeige geeignete digitale Bilddaten erzeugt werden.

### Stand der Technik

Digitale Filmkameras mit optoelektronischen Sensoren weisen gegenüber herkömmlichen Filmkameras mit chemischem Film einige Vorteile auf, wie z.B. die sofortige Beurteilbarkeit der erreichten Qualität einer gerade gefilmten Szene. Sie weisen aber meist immer noch etliche, teils gravierende Nachteile auf. Daher werden für fast alle Kino-Filmprojekte immer noch herkömmliche Filmkameras mit chemischem Film verwendet. Im Folgenden werden kurz drei der vielen noch vorhandenen Nachteile digitaler Filmkameras beispielhaft angeführt:

Im Gegensatz zu Kameras mit chemischem Film, können die digitalen Kameras mit den heute verfügbaren optoelektronischen Sensoren nur einen relativ geringen Kontrastumfang verarbeiten. Konsumerkameras können in der Regel maximal nur Helligkeitsunterschiede von ca. 1 : 30 aufzeichen, professionelle Videokameras schon über 1 : 100, wogegen chemischer Film sogar Helligkeitsunterschiede von weit über 1 : 1000 aufzeichnen kann. Dies ist einer der größten Nachteile digitaler Filmkameras. Bei nicht entsprechend ausgeleuchteten Szenen, wie sie z.B. Dokumentarfilmer oftmals vorfinden, können dunkle oder helle Details einer Szene unwiderruflich verloren gehen.

Ein weiterer erheblicher Nachteil bei digitalen Filmkameras liegt in einer meistens unbefriedigenden Bewegungsunschärfe. Im Gegensatz zu herkömmlichen Filmkameras mit rotierendem Spiegelverschluß, erfolgen Beginn und Ende der Belichtung aller Bildpunkte bei den meisten digitalen Filmkameras mit elektronischem Verschluss nicht gleichzeitig, so dass die Geometrie bewegter Objekte verzerrt wird

Weiterhin zeigen die meisten digitalen Filmkameras in ihrem elektronischen Sucher, im Gegensatz zu den meisten herkömmlichen Filmkameras mit optischem Sucher, den gleichen Bildauschnitt an, wie er auch aufgenommen wird. Man kann also z.B. nicht rechtzeitig erkennen, ob die Gefahr besteht, dass ein unerwünschter Gegenstand, wie z.B. ein Mikrofon, in einen aufgenommenen Bildausschnitt gerät. Dieser Nachteil ist mit der zunehmenden Verfügbarkeit von Bildsensoren mit größerer Pixelzahl als für die Aufzeichnung benötigt werden jedoch prinzipiell bereits beseitigt: Mit einem solchen Bildsensor wird dann z.B. stets der ganze von ihm erfaßbare Bildbereich ohne Zuordnung zu einem bestimmten Verwendungszweck aufgenommen und in einem digitalen Bildspeicher abgelegt. Derjenige Teilinhalt dieses Bildspeichers, welcher dem aufzuzeichnenden Bildausschnitt entspricht, wird dann, ohne die Bildspeicherdaten zu ändern, farblich und auflösungsmäßig in das für die Aufzeichnung vorgesehene Bildformat, z.B. YCbCr, gewandelt und an die Aufzeichnungseinheit der Kamera geleitet. Zusätzlich wird der Gesamtinhalt des Bildspeichers farblich und auflösungsmäßig in das für den verwendeten elektronischen Sucher geeignete Bildformat, z.B. RGB, gewandelt und an den Sucher zur Anzeige geleitet. Diesen Daten wird typischerweise zuvor noch ein dünner Bildrahmen überlagert, welcher den aufgezeichneten Bildausschnitt kennzeichnet, so daß der Anwender jetzt im Sucher sehen kann, was aufgezeichnet wird und was sich noch außerhalb des aufgezeichneten Bildausschnitts befindet, womit dieser Sucher dann eine wesentliche Eigenschaft eines optischen Suchers bietet.

Professionelle digitale Filmkameras verwenden in der Regel ein Strahlenteilerprisma, um das Bild auf drei unterschiedliche Farben registrierende Bildsensoren zu verteilen, so dass die Bildschärfe der Bildpunktanzahl eines der Sensoren entspricht. Diese Kameras benötigen jedoch aufwendig konstruierte und damit teure Objektive, um die vom Prisma verursachten Bildfehler zu korrigieren. Digitale Filmkameras mit Bildsensoren für die Verwendung herkömmlicher Filmobjektive haben dagegen eine Bildschärfe, welche geringer als die ihrer Bildpunktanzahl entsprechende Schärfe ist, da heutige hochauflösende Filmkamera-Sensoren noch nicht alle Farben an einer Bildpunktposition registrieren können, sondern über jedem Bildpunkt vorgeschaltete Farbfilter jeweils nur eine Farbe.

Die fehlenden Farben müssen dann aus den Farbiriformationen benachbarter Bildpunkte rekonstruiert werden, was die Bildschärfe beträchtlich reduziert.

### Ziel der Erfindung

Mit der vorliegenden Erfindung wird angestrebt, wenigstens einen der oben beschriebenen Nachteile zu verbessern.

Insbesondere wird angestrebt, bei digitalen Kameras ohne Strahlenteilerprisma, welche Bildsensoren verwenden, die je Bildpunkt nicht alle Farben registrieren können, die Bildschärfe zu erhöhen.

Dieses Ziel wird erreicht mit einer digitalen Filmkamera mit den Merkmalen des Patentanspruchs 1. Das Ziel wird ferner erreicht mit einem Verfahren mit den Merkmalen des Patentanspruchs 8.

Durch die erfindungsgemäße Maßnahme, während eines einer Bildrate entsprechenden Zeitabschnitts mehr als ein Bild (im folgenden auch als Zwischenbild bezeichnet) aufzunehmen, und einzelne oder mehrere dieser Zwischenbilder einer Bildverarbeitung zuzuführen, ergeben sich, je nach konkret gewählter Bildverarbeitung, verschiedene Möglichkeiten. Unter "Bildrate" wird hierbei, im Sinne der üblichen Definition, die Anzahl der (für jeden Betrachter des aufgenommenen Films) dargestellten Bilder pro Zeiteinheit (z.B. pro Sekunde) verstanden. Bei einer typischen Bildrate von 25 Bildern pro Sekunde stehen somit 25 Zeitabschnitte zu je 40 ms zur Verfügung.

Beispielsweise ist es durch rechnerische In-Beziehung-Setzung zweier einem bestimmten Zeitabschnitt zugeordneter Zwischenbilder möglich, einen wesentlich größeren Kontrastumfang des aufzunehmenden Bildausschnitts darzustellen, als dies mit herkömmlichen Lösungen möglich war.

Es ist ferner möglich, bei optoelektronischen Sensoren mit solchen elektronischen Verschlüssen, welche die Geometrie von sich im Bildausschnitt bewegenden Objekten verzerren, oder welche nur kurze Belichtungszeiten zulassen und damit eine ungenügende Bewegungsunschärfe bewirken, die Nachteile solcher Verschlüsse zu mindern.

Eine besonders einfache Datenverarbeitung für die Aufbereitung der Bildsensordaten für die verschiedenen weiteren Einheiten der Kamera, wie Sucher, Rekorder, Funkübertragung etc., welche in der Regel jeweils unterschiedliche Bilddatenformate verwenden, ist erfindungsgemäß ebenfalls bereitstellbar.

Schließlich erlaubt die vorliegende Erfindung, auch bei heller Szenenbeleuchtung ohne Einsatz von Graufiltern und ohne Verzicht auf eine ausreichende Bewegungsunschärfe eine geringe Schärfentiefe zu erreichen.

Vorteilhafte Ausgestaltungen der Erfindung sind Gegenstand der Unteransprüche.

Zweckmäßigerweise weist die erfindungsgemäße digitale Filmkamera eine Einrichtung zur Bildung eines Mittelwertes von mindestens zwei einem Zeitabschnitt zugeordneten Zwischenbildern auf, wobei ein hierbei verwendeter Algorithmus insbesondere eine Gewichtung der einzelnen Bildpunkte der Zwischenbilder entsprechend einer erfassten Bildpunkthelligkeit oder anderen Parametern vornehmen kann. Die Einrichtung zur Bildung eines Mittelwertes kann insbesondere integriert mit der Bildverarbeitungseinrichtung realisiert sein.

Es ist ferner bevorzugt, dass die Kamerasteuerungseinheit wenigstens zwei Zwischenbilder mit gleicher und/oder unterschiedlicher Bildbereichsgröße, Bildpunkteanzahl, Belichtungsdauer, Helligkeit, Zwischenbildrate usw. aufgenommen werden können. Die Aufnahme unterschiedlicher Bildbereichsgrößen und/oder Bildpunkteanzahlen kann beispielsweise im Zusammenhang mit der Aufnahme eines Bildes für eine Sucheranzeige eingesetzt werden. Typischerweise werden für eine Sucheranzeige geringere Auflösungen benötigt, so dass beispielsweise eine Bild, das für die Weiterverarbeitung zu einer Sucheranzeige verwendet wird, eine relativ geringe Bildpunkteanzahl aufweist, wobei ein Bild, das zur Aufzeichnung verwendet wird, eine relativ große Bildpunkteanzahl aufweist. Wie bereits eingangs erläutert, sind die Bildfelder von Sucheranzeigen in der Regel auch größer als diejenigen tatsächlich aufgezeichneter Bilder. Die Einstellung unterschiedlicher Belichtungsdauern kann im Ergebnis als rechnerische Simulierung von Neutraldichtefiltern dienen.

Der Begriff "Bildrate" wurde bereits erläutert. Unter Zwischenbild-Bildrate wird im folgenden die Anzahl der Zwischenbilder verstanden, die während eines Zeitabschnitts von der erfindungsgemäßen digitalen Filmkamera aufgenommen wird. Herkömmlicherweise wurde während eines derartigen Zeitabschnitts lediglich ein Bild aufgenommen. Durch die erfindungsgemäße Maßnahme, mehr als ein Zwischenbild während eines derartigen Zeitabschnitts aufzunehmen (Zwischenbildrate ≥ 2), sind unterschiedlichste Anwendungsmöglichkeiten bzw. Verarbeitungsmöglichkeiten bereitgestellt. Beispielsweise wäre es auch möglich, während eines Zeitabschnitts drei Zwischenbilder aufzunehmen, wobei zwei der Zwischenbilder zur bereits erwähnten Mittelwertbildung verwendet werden könnten, und das dritte zur Bereitstellung eines Sucherbildes.

In besonders vorteilhafter Ausgestaltung ist die erfindungsgemäße digitale Filmkamera derart ausgebildet, dass die Kamerasteuerungseinheit den wenigstens einen Bildsensor so beaufschlagt oder steuert, dass dieser für mindestens eines der Zwischenbilder insbesondere dunkle Bildbereiche optimal aufnimmt, und für mindestens eines der übrigen Zwischenbilder insbesondere helle Bildbereiche optimal aufnimmt, und wobei aus diesen Zwischenbildern mittels rechnerischer Überlagerung ein Ergebnisbild ermittelt wird, wobei bei der Ermittelung des Ergebnisbildes ein Algorithmus verwendet wird, welcher für dunkle Bildpunkte die für dunkle Bildbereiche optimierten Zwischenbilder bevorzugt, und für helle Bildpunkte die für helle Bildbereiche optimierten Zwischenbilder. Mit dieser Maßnahme kann insbesondere der Kontrastbereich einer digitalen Filmkamera gegenüber herkömmlichen Lösungen erhöht werden. Unter Beaufschlagung des Bildsensors wird insbesondere verstanden, dass dieser mit ihm vorgeschalteten mechanischen Mitteln zusammenwirkt, die einen Einfluss auf die Belichtung des Sensors haben können. Derartige Beaufschlagungsmittel können von der Kamerasteuerungseinheit oder einer anderen geeigneten Komponente der digitalen Filmkamera gesteuert werden. Unter Steuerung des Bildsensors wird insbesondere verstanden, dass der Bildsensor elektronisch beeinflussbar ist, beispielsweise zur Variation seiner Empfindlichkeit usw.

Zweckmäßigerweise weisen die Beaufschlagungsmittel ein vor dem Bildsensor angeordnetes, rotierendes Verschlussrad auf, welches lichtdurchlässige und lichtundurchlässige Bereiche bzw. Sektoren aufweisen kann, und/oder mit Neutraldichtefiltern unterschiedlicher Dichte bestückt sein kann. Hierbei kann zweckmäßigerweise das Verschlussrad von der Kamerasteuerungseinheit so gesteuert und synchronisiert werden, dass Zwischenbilder mit unterschiedlichen Lichtintensitäten aufgenommen werden. Die Bereitstellung von Zwischenbildern mit unterschiedlichen Lichtintensitäten ist hier in vorteilhafter Weise ohne die Notwendigkeit einer Änderung der Lichtempfindlichkeit des Bildsensors bereitstellbar. Zwischenbilder unterschiedlicher Lichtintensität können mittels Dimensionierung der jeweiligen lichtdurchlässigen und lichtundurchlässigen Bereiche und/oder der eigentlichen Lichtdurchlässigkeit bzw. Transmissivität der lichtdurchlässigen Bereiche realisiert werden.

Gemäß einer weiteren bevorzugten Ausführungsform der digitalen Filmkamera weisen die Mittel zur Beaufschlagung des Bildsensors einen mechanischen Antrieb auf, mittels dessen der Bildsensor zwischen den Aufnahmen zweier Zwischenbilder in der Höhe und/oder zur Seite hin um einen vorgebbaren Betrag verschiebbar ist. Hierdurch weisen die beiden aufeinanderfolgenden Zwischenbilder jeweils einen etwas anderen Bildausschnitt auf. Für die Ermittlung des Ergebnisbildes steht dann bei geeigneter Wahl des mechanischen Versatzes eine größere Bildpunkteanzahl zur Verfügung, als der Bildsensor Bildpunkte aufweist, womit eine höhere Bildschärfe erreicht wird.

Wenn gleichzeitig auch die erfindungsgemäße Lösung zur Registrierung eines hohen Kontrastumfangs angewendet wird, ist diese Art der Schärfeerhöhung nur innerhalb des gemeinsamen Helligkeitsbereiches der Zwischenbilder möglich, wobei sich dennoch noch ein sichtbarer Schärfegewinn ergibt, da der gemeinsame Helligkeitsbereich einen wichtigen Teil der Bildinformation beinhaltet.

Diese Vorgehensweise ist vor allem bei Bildsensoren mit Farbbildern vor den einzelnen Sensorpixeln wirkungsvoll. Derartige Sensoren verwenden beispielsweise in den ungeradzahligen Bildzeilen Farbfilter in der Reihenfolge grün, blau, grün, blau usw., und in den geradzahligen Bildzeilen rot, grün, rot, grün usw. Je Sensorbildpunkt ist jeweils nur eine Farbe bekannt, so dass die fehlenden Farben aus den Farben der umliegenden Bildpunkte rekonstruiert werden müssen, womit die Bildschärfe erheblich abnimmt. Wird der Sensor zwischen der Aufnahme der Zwischenbilder, z.B. in der Höhe um ein Pixel verschoben, so sind dann für die Ermittlung des Ergebnisbildes je Bildpunkt auch abwechselnd die Farben grün und rot bzw. grün und blau bekannt. Da das Grünfilter auch einen gewissen Anteil blau und rot durchlässt, und das Blaufilter bzw. Rotfilter jeweils einen gewissen Anteil grün, kann für jede Bildpunktposition die fehlende dritte Farbe mit guter Treffsicherheit errechnet werden, ohne auf schärfemindernde Farbinformation von Nachbarbildpunkten zurückgreifen zu müssen.

Die Belichtung des Sensors bzw. der Sensoren unter Verwendung eines vor dem Sensor rotierenden Verschlussrades ermöglicht auch bei gängigen Bildsensoren mit elektronischem Rollverschluss, bei denen in der Regel keine ausreichende Zeit vorhanden ist, um den Sensor zwischen der Aufnahme zweier Zwischenbilder mechanisch zu verschieben, eine unterschiedliche Belichtung ohne Änderung der Sensorempfindlichkeit.

Das Verschlussrad ist zweckmäßigerweise so ausgebildet, dass es den Sensor während des Auslesens eines Zwischenbildes abdunkelt, wobei während dieser Zeit der Sensor mechanisch, z.B. um eine Bildzeile nach oben bzw. nach unten verschoben werden kann.

Alternativ oder zusätzlich kann ein derartiges Verschlussrad ferner mit Neutraldichtefiltern unterschiedlicher Dichte bestückt sein, so dass der Sensor Zwischenbilder unterschiedlicher Helligkeit aufnimmt, ohne dass er nach der Aufnahme eines Zwischenbildes auf einen anderen Helligkeitsbereich umprogrammiert werden muss.

Zuzüglich ergibt sich eine Bewegungsunschärfe ohne geometrische Verzerrungen.

Die Erfindung wird nun anhand der beigefügten Zeichnung weiter erläutert. In dieser zeigt
- Figur 1: eine schematische Ansicht einer bevorzugten Ausführungsform einer erfindungsgemäßen digitalen Filmkamera,
- Figur 2: ein Schaubild zur Erläuterung bevorzugter Funktionsweisen der Filmkamera gemäß Figur 1, und
- Figur 3: eine schematische Draufsicht einer Ausführungsform eines erfindungsgemäß verwendbaren Verschlussrades bzw. Sektorverschlusses.

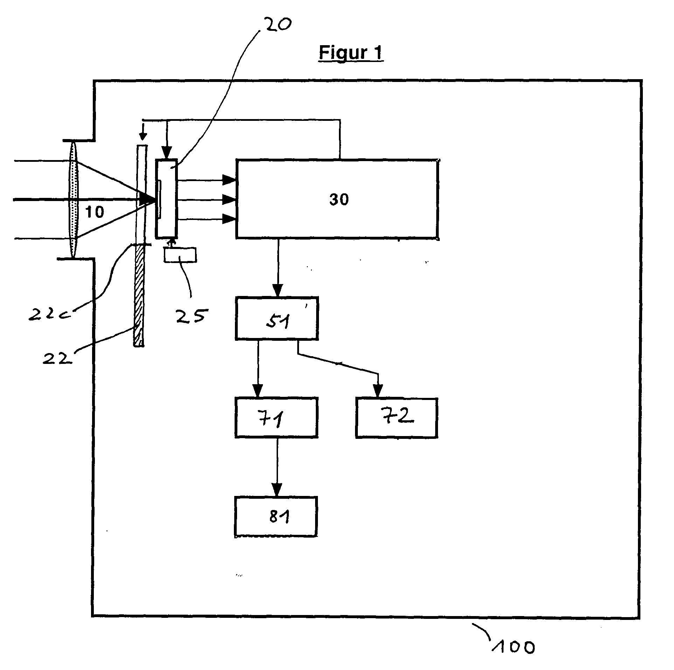

Eine bevorzugte Ausführungsform der erfindungsgemäßen Filmkamera ist in Figur 1 insgesamt mit 100 bezeichnet.

Die Filmkamera 100 weist ein Objektiv 10, und wenigstens einen dem Objektiv 10 nachgeschalteten optoelektronischen Bildsensor 20 auf. Der Bildsensor 20 ist mit einer Kamerasteuerungseinheit 30 verbunden, welche (nicht dargestellt) wenigstens einen Mikroprozessor und wenigstens einen Speicherbereich aufweist.

Die Steuerungseinheit 30 ist ihrerseits mit weiteren Einheiten der digitalen Filmkamera 100 verbunden, beispielsweise einer weiter unten im einzelnen erläuterten Verarbeitungseinheit 51, einer Bildaufzeichnungseinheit 71, einer Sucheranzeige 72 und einer Bildwiedergabeeinheit 81.

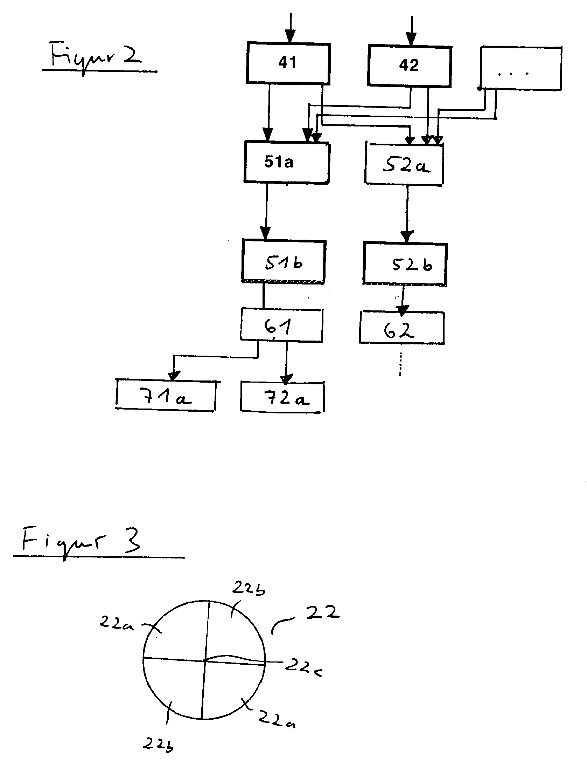

Dem Objektiv 10 vorgeschaltet ist ferner ein um eine Achse 22c rotierbarer Sektorverschluss 22 (siehe auch Figur 3). Der Sektorverschluss 22 kann, je nach Ausführungsform lichtdurchlässige Sektoren und lichtundurchlässige Sektoren 22a, 22b aufweisen. Insbesondere kann der Sektorverschluss 22 mit Neutraldichtefiltern unterschiedlicher Dichte bestückt sein, so dass z. B. die Sektoren 22a eine andere Lichtdurchlässigkeit aufwesen als die Sektoren 22b. Es sei angemerkt, dass die Darstellung des Sektorverschlusses mit vier Sektoren rein beispielhaft erfolgt. Es sind mehr oder weniger Sektoren denkbar, wobei auch einige der Sektoren vollkommen lichtdurchlässig, teilweise lichtdurchlässig (z. B. bestückt mit Neutraldichtefiltern) oder vollkommen lichtundurchlässig ausgebildet sein können. Die Sektoren können auch unterschiedliche Größen bzw. Winkelerstreckungen aufweisen. Durch entsprechende Steuerung bzw. Synchronisation, beispielsweise mittels der Steuerungseinheit 30 kann eine Belichtung des Bildsensors 20 mittels durch das Objektiv 10 eintretenden Lichtes zugelassen oder verhindert werden. Insbesondere können mittels der unterschiedlich ausgebildeten Neutraldichtefilter Zwischenbilder mit unterschiedlichen Lichtintensitäten aufgenommen werden.

Es sei darauf hingewiesen, dass im Rahmen der Figur 1 lediglich die für die Beschreibung der vorliegenden Erfindung notwendigen Komponenten einer digitalen Filmkamera im einzelnen (rein schematisch) dargestellt sind.

Unter Bezugnahme auf die Figur 2 werden nun eine besonders bevorzugte Einsatzmöglichkeiten der dargestellten digitalen Filmkamera 100 erläutert.

In der weiteren Beschreibung ist mit "der Bildsensor, bzw. Kamera-Bildsensor" auch die Mehrzahl für Kameras mit mehr als einem Bildsensor eingeschlossen, und mit "Bildverarbeitungseinheit" ist wahlweise auch "Rechenprozedur" gemeint.

Die folgend beschriebenen Merkmale bzw. Ausgestaltungen der Erfindung können auch in jeglicher Kombination oder Unterkombination angewendet werden, ohne den Rahmen der Erfindung zu verlassen.

Der Bildsensor 20 wird gemäß dem in Figur 2 dargestellten Ausführungsbeispiel von der Steuerung 30 so gesteuert, dass er während des Zeitabschnitts, welcher einer gewählten Bildrate f entspricht, z.B. 40 msec bei einer Bildrate f von 25 Bildern je Sekunde, zwei oder mehr Zwischenbilder (Schritte 41, 42, ...) aufnimmt, wobei diese je nach Aufgabe mit gleicher oder aber auch unterschiedlicher Bildbereichsgröße, Bildpunkteanzahl, Belichtungsdauer, Helligkeit, Zwischenbild-Bildrate, etc. aufgenommen werden können. Die Verarbeitungseinheit 51 weist eine Anzahl von Zwischenbild-Verarbeitungseinheiten auf. Einzelne und/oder mehrere der erfassten Zwischenbilder werden dann von einer oder mehreren Zwischenbild-Verarbeitungseinheiten in Schritten 51a, 52a, ... zu jeweils einem Ergebnisbild verarbeitet, welches dann, nach eventueller Zwischenspeicherung (Schritte 51b, 52b, ...) und eventueller, weiterer Bildverarbeitung (Schritte 61, 62, ...) an die weiteren Einheiten der Kamera, insbesondere zur

Aufzeichnung (Aufzeichnungseinrichtung 71, Schritt 71a) oder Sucheranzeige (Sucher 72, Schritt 72a) usw. weitergeleitet werden. Die Schritte 71a und 72a sind zur Vereinfachung der Darstellung in Figur 2 nur ausgehend von Schritt 61 gezeigt.

Eine vorteilhafte Ausgestaltung der Erfindung stellt eine Lösung des Ziels zur Verfügung, mit einem optoelektronischen Bildsensor 20 einen möglichst großen Kontrastumfang des aufzuzeichnenden Bildausschnitts zu erfassen. Im Gegensatz zu chemischem Film, welcher einen Kontrastumfang von teils weit über 1 : 1000 aufzuzeichnen vermag, können bisherige optoelektronische Sensoren nur einen relativ geringen Kontrastumfang verarbeiten. Auch wenn sie digitale Bilddaten z.B. in einem Bereich von 1 : 4096 ausgeben, so sind alle niedrigen Werte im Bereich von z.B. unter 32 meist unbrauchbar, da deren Werte stark fehlerbehaftet sind und ihnen ein starkes Rauschen überlagert ist, so dass der ausnutzbare Kontrastumfang in diesem Beispiel dann doch bei nur 1 : 128 liegt. Alle Werte oberhalb eines von den Bildsensoreigenschaften vorgegebenen Wertes (hier 4096) sind in der Regel vollkommen unverwendbar.

Um diesen Nachteil auszugleichen oder zumindest zu mindern, wird wie folgt verfahren: es werden bevorzugt nacheinander mindestens zwei Zwischenbilder (Schritte 41 und 42) zur Erzeugung mindestens eines Ergebnisbildes (Schritt 51a) aufgenommen, wobei der Bildsensor 20 zumindest zwei Zwischenbilder mit unterschiedlichen Helligkeitsbereichen aufnimmt. Hierzu kann der Bildsensor z.B. für ein Zwischenbild mit einer 8-fachen Vorverstärkung und für mindestens eines der übrigen Zwischenbilder mit einer 1/2-fachen Vorverstärkung programmiert werden. Alternativ kann über ein vor dem Bildsensor rotierendes und mit Neutraldichtefiltern unterschiedlicher Dichte von z.B. 1:16 versehenes Belichtungs-Verschlussrad der Sensor je Zwischenbild unterschiedliche Lichtintensitäten erhalten, so dass eine Umprogrammierung entfallen kann. Im Ergebnis erzeugt dann ein Bildsensor 20, der z.B. einen Kontrastumfang von 1:128 relativ fehlerfrei verarbeiten kann, also mindestens 1 Zwischenbild "Zd" (z.B. in Schritt 41) und 1 Zwischenbild "Zh" (z.B. in Schritt 42) mit jeweils den relativen nutzbaren Helligkeitswerten von z.B. 32 bis 4096, wobei dann alle Werte unter 32 und über 4096 als unbrauchbar betrachtet werden und wobei die Helligkeitswerte von Zh im Vergleich zu denen von Zd einer jeweils 16-fach (8-facher zu 1/2-facher Vorverstärkung) höheren Helligkeit entsprechen, d.h. den Werten 512 bis 65536.

Die Zwischenbild-Verarbeitungseinheit 51 setzt nun die Zwischenbilder Zd und Zh nach Multiplikation aller Zh-Werte mit 16 und nach Mittelwertsbildung nach einem Algoritmus zu einem einzigen Ergebnisbild Em (z. B. in Schritt 51a) zusammen. Z.B. kann für alle Bildpunkte, deren Helligkeit sich während der Zeit zwischen Zd und Zh nur wenig verändert hat (bei unbewegten Bildteilen), d.h. bei denen Zd etwa Zhx16 ist, Em für Zd kleiner 512 zu Zd gesetzt werden, für Zd größer 4095 zu Zhx16 und für alle anderen Werte zu dem Mittelwert von Zd und Zhx16, wobei diese Mittelung vorzugsweise gewichtet erfolgt, indem für niedrige Werte von Zd vor allem Zd beiträgt und für hohe Werte vor allem Zhx16. Für alle Bildpunkte, deren Helligkeit sich während der Zeit zwischen Zd und Zh stark verändert hat (bei sich bewegenden Bildteilen), d.h. bei denen Zd von Zhx16 stark abweicht, kann Em für Zhx16 kleiner 512 zu Zd gesetzt werden, für Zd größer 4095 zu Zhx16 und für alle anderen Werte zu dem ungewichteten Mittelwert von Zd und Zhx16.

Auf die oben beschriebene Weise wird für alle Helligkeitsbereiche des Ergebnisbildes eine optimierte Bildqualität erzielt. Das Ergebnisbild kann jetzt einen Kontrastumfang von 1:(128x16)=1:2048 in guter, rauscharmer Qualität darstellen, was bereits in etwa dem chemischen Film entspricht. So kann diese Erfindung dazu beitragen, einen der größten Nachteile bisheriger optoelektronischer Sensoren auszugleichen.

Anschließend wird dieses Ergebnisbild z.B. noch mittels einer weiteren Bildverarbeitung (Schritt 61) umgewandelt (z.B. Zahlenwertnormierung, Farbkonvertierung, Auflösung, Datenkompression, etc.) und an die weitere(n) Funktionseinheit(en) der Kamera geleitet.

Die oben beschriebene Variante der Erfindung, einen möglichst hohen Kontrastumfang des aufzuzeichnenden Bildes zu erfassen, kann auch für das herkömmliche Fernseh-Halbbild-Verfahren angewandt werden. Bei diesem besteht jedes Bild aus 2 nacheinander aufgenommenen Halbbildern, welche abwechselnd nur geradzahlige Bildzeilen und dann nur ungeradzahlige Bildzeilen enthalten. Beide Halbbilder werden dann jeweils getrennt aufgezeichenet. Vorzugsweise wird die Erfindung wie folgt angewendet: es werden wie oben beschrieben mindestens zwei Zwischenbilder (in Schritten 41 und 42) aufgenommen und zu jeweils einem Ergebnis-Halbbild 51a mit entweder nur geradzahligen oder nur ungeradzahligen Bildzeilen verarbeitet und an die weiteren Einheiten der Kamera weitergeleitet. Es können für die Zwischenbilder statt Vollbildern auch nur Halbbilder gleicher Art (nur geradzahlige oder nur ungeradzahlige Bildzeilen) aufgenommen werden.

Eine weitere vorteilhafte Ausgestaltung der Erfindung stellt eine Vorrichtung zur Lösung des Ziels zur Verfügung, bei optoelektronischen Sensoren 20 mit solchen elektronischen Verschlüssen, welche die Geometrie von sich schnell im Bildausschnitt bewegenden Objekten verzerren, oder welche nur kurze Belichtungszeiten zulassen und damit eine ungenügende Bewegungsunschärfe bewirken, die Nachteile solcher Verschlüsse zu mindern.

Handelt es sich z.B. um einen sogenannten "Roll-Verschluss", so erfolgt der Beginn der Belichtung Bildzeile für Bildzeile etwas später, so dass z.B. ein sich von links nach rechts durch den Bildausschnitt bewegender senkrechter Gegenstand nach links geneigt aufgenommen wird, wobei die Neigung um so größer ist, je geringer die Bildrate ist und je schneller sich der Gegenstand bewegt. Die Programmierung einer kurzen Belichtungszeit ändert nichts an diesem Verhalten.

Um den Nachteil eines "Roll-Verschusses" zu mindern, wird wie folgt verfahren: es werden nacheinander mindestens zwei Zwischenbilder (Schritte 41, 42) aufgenommen, aus denen die Verarbeitungseinheit 51 durch Mittelwertbildung ein Ergebnisbild berechnet (Schritt 51a). Da die Aufnahme von zwei oder mehr Zwischenbildern einer entsprechenden Erhöhung der Bildrate entspricht, wird bei einem "Roll-Verschluß" die Verzerrung entsprechend der Anzahl der Zwischenbilder mindestens um die Hälfte reduziert. Durch die Mittelwertbildung (Überlagerung) der Zwischenbilder wird dann auch wieder eine größere Bewegungsunschärfe erreicht, was dann auch den Nachteil eines "Pseudo-Globalverschlusses" entsprechend mindert.

Eine weitere vorteilhafte Ausgestaltung der Erfindung stellt eine Lösung der Aufgabe zur Verfügung, eine besonders einfache Datenverarbeitung zu erreichen, wenn die vom Bildsensor aufgenommenen Bilder in unterschiedlicher Form, z.B. bezüglich Bildausschnitt, Auflösung, Farbsystem etc., den weiteren Einheiten der Kamera bereitgestellt werden sollen. Bei hochauflösenden (HD) Bildaufnahmen kann es z.B. wünschenswert sein, parallel zu den im HD-Format aufgezeichneten Bildern eine Funkübertragung oder eine weitere Aufzeichnung in einem niedrig auflösenden Format vorzunehmen und/oder einem Sucher Bilder mit einem größeren als dem aufgezeichneten Bildausschnitt und/oder einer niedrigeren Auflösung zur Verfügung zu stellen.

Moderne Bildsensoren können mittlerweile zwischen der Aufnahme zweier Einzelbilder in ihrem Verhalten in erheblichem Umfang modifiziert werden. So lassen sich bisweilen der verwendete Sensorbildausschnitt, die Auflösung, die Vorverstärkung, die Bildrate, etc neu vorgeben.

Es werden entsprechend auch bei dieser Einsatzmöglichkeit nacheinander mehrere Zwischenbilder aufgenommen, wobei jeweils ein oder mehrere davon einem bestimmten ErgebnisbildFormat zugeordnet werden und der Bildsensor bereits jeweils vor einer Aufnahme für die dem Ergebnisbildformat entsprechende optimierte Aufnahme eingestellt wurde. So könnte der Bildsensor 20 dann z.B. ein erstes Zwischenbild (in Schritt 41) stets mit der HD-Auflösung von 1920 x 1080 Bildpunkten aufnehmen, ein zweites Zwischenbild (in Schritt 42) für die Funkübertragung im Format von 640 x 360 Bildpunkten aus je 3 x 3 Sensorpixeln von 1920 x 1080, und ein drittes Zwischenbild (Schritt 43) für das Sucherbild mit 520 x 292 Bildpunkten aus je 4 x 4 Sensorpixeln von z.B. 2080 x 1168 Sensorpixeln. Die weitere Bildverarbeitung gestaltet sich dann sehr einfach.

Eine weitere vorteilhafte Ausgestaltung der Erfindung stellt eine Vorrichtung zur Verfügung, mit welcher auch bei heller Szenenbeleuchtung ohne Einsatz von Graufiltern und ohne Verzicht auf eine Bewegungsunschärfe eine geringe Schärfentiefe zu erreichen ist.

Zur Erzielung einer geringen Schärfentiefe muß eine offene Blende verwendet werden. Je offener die Blende ist, desto geringer wird die Schärfentiefe und umso mehr Licht fällt auf den Bildsensor. Zur Erzielung einer ausreichenden Bewegungsunschärfe muß andererseits eine lange Belichtungszeit verwendet werden. Beides zusammen kann leicht zu einer Überbelichtung des optoelektronischen Bildsensors führen. In der Praxis werden zur Lösung dieses Problems Graufilter entsprechender Dichte eingesetzt. Verfügbare Kameras haben jedoch entweder gar keine oder nur sehr wenige Graufilter eingebaut, so dass eine für den Bildsensor optimale Lichtmenge nicht zuverlässig eingestellt werden kann. Es müssen also vor das Objektiv Dichtefilter mit der jeweils erforderlichen Lichtdämpfung in spezielle Filterhalter eingesetzt werden. Dies ist jedoch umständlich und reinigungsaufwendig. Bei elektronischen Sensoren kann nun andererseits leicht eine sehr kurze Belichtungszeit erreicht werden, so dass sich leicht eine optimale Sensorbelichtung erzielen läßt. Kurze Belichtungszeiten führen aber zu Bildern, welchen praktisch jede Bewegungsunschärfe fehlt.

Um den Vorteil, keine externen Graufilter verwenden zu müssen, zu erhalten und den Nachteil einer zu geringen Bewegungsunschärfe zu mindern, wird die Erfindung vorzugsweise wie folgt eingesetzt: Es werden während eines Zeitabschnitts, der einer Bildrate f entspricht, nacheinander mindestens zwei Zwischenbilder zur Erzeugung eines Ergebnisbildes aufgenommen, wobei die Belichtungszeit der Zwischenbilder so gewählt wird, dass eine optimale Belichtung des Sensors erreicht wird. Die Verarbeitungseinheit 51 errechnet dann durch Mittelwertbildung (Überlagerung) der Zwischenbilddaten das Ergebnisbild (Schritt 51a). Dieses weist jetzt wieder eine Bewegungsunschärfe auf, da es aus zwei oder mehr, zu unterschiedlichen Zeiten aufgenommenen, Zwischenbildern mit jeweils geringer Bewegungsunschärfe zusammengesetzt ist. Jedes sich im Bildausschnitt bewegende Objekt wird also aus der Überlagerung seiner im Verlauf der Zeit örtlich unterschiedlichen Positionen im Bildausschnitt der jeweiligen Zwischenbilder zusammengesetzt, so dass es im Ergebnisbild entsprechend unscharf dargestellt wird. Es wird hierbei zwar eine stufenförmige Unschärfe erzeugt, die aber um so feinstufiger wird, je mehr Zwischenbilder erzeugt werden. In jedem Fall ist im Ergebnisbild ein großer Anteil der Bewegung des Objektes erfaßt und in der Regel ein großer Teil des sich bewegenden Objektes unscharf abgebildet. Diese Variante der Erfindung kann mit Filmkameras mit chemischem Film nicht realisiert werden und stellt damit einen generellen Fortschritt für Filmkameras dar, bei welchen vor allem eine einfache Bedienung im Vordergrund stehen soll.

Es sei schließlich angemerkt, daß für den Fall, daß eine nicht zu vernachlässigende Zeit Up für die Umprogrammierung des Bildsensors zwischen einzelnen Zwischenbildern benötigt wird, vorzugsweise die Reihenfolge der Zwischenbildtypen ständig gewechselt wird. So erfolgt z.B. bei jeweils einem Zwischenbild für die Aufzeichnung Za und den Sucher Zs je Gesamtdauer (Gd) die Aufnahme der Zwischenbilder und die entsprechende Umprogrammierung statt in der Reihenfolge: (Up-Za-Up-Zs), (Up-Za-Up-Zs), (Up-Za-Up-Zs), ..... , usw. in der Reihenfolge ... (Za-Up-Zs), (Zs-Up-Za), (Za-Up-Zs), (Zs-Up-Za), ..... , usw. Auf diese Weise kann die für die Umprogrammierung aufzuwendende Zeit minimiert werden.

## Patentansprüche

1. Digitale Filmkamera mit wenigstens einem optoelektronischen Bildsensor (20) zur Aufnahme von einem Kameraobjektiv (10) mit einer Bildrate f erfasster Bilder, einer Kamerasteuerungseinheit zur Steuerung des wenigstens einen Bildsensors (20) und wenigstens einer Bildverarbeitungseinrichtung (51) zur Verarbeitung der von dem wenigstens einen Bildsensor (20) erfassten Bilder, **dadurch gekennzeichnet, dass** die Kamerasteuerungseinheit (30) den wenigstens einen Bildsensor (20) derart steuert, dass dieser während eines der Bildrate f entsprechenden Zeitabschnitts wenigstens zwei Zwischenbilder aufnimmt, wobei einzelne und/oder mehrere dieser Zwischenbilder von der Bildverarbeitungseinrichtung (51) jeweils zu einem Ergebnisbild verarbeitbar sind, welches dann weiteren Einrichtungen der Kamera, insbesondere Einrichtungen zur Speicherung, zur Aufzeichnung oder zur Sucheranzeige, zur Verfügung gestellt wird.

2. Digitale Filmkamera nach Anspruch 1, **dadurch gekennzeichnet, dass** sie eine Einrichtung (51) zur Bildung eines Mittelwertes durch Mittelwertbildung von mindestens zwei Zwischenbildern zur Bereitstellung eines Ergebnisbildes aufweist, wobei ein hierzu verwendeter Algorithmus insbesondere eine Gewichtung entsprechend Bildpunkthelligkeit oder anderen Parametern vornehmen kann.

3. Digitale Filmkamera nach einem der Ansprüche 1 oder 2, **dadurch gekennzeichnet, dass** die wenigstens zwei Zwischenbilder mit gleicher oder unterschiedlicher Bildbereichsgröße, Bildpunkteanzahl, Belichtungsdauer, Helligkeit, Zwischenbild-Bildrate usw. aufnehmbar sind.

4. Digitale Filmkamera nach einem der vorstehenden Ansprüche, **dadurch gekennzeichnet, dass** die Kamerasteuereinheit (30) Mittel zur Beaufschlagung und/oder Steuerung des wenigstens einen Bildsensors (20) derart aufweist, dass er für wenigstens eines einem Zeitabschnitt der Bildrate f zugeordneten Zwischenbilder insbesondere dunkle Bildbereiche optimal aufnimmt, und für wenigstens eines der übrigen dem Zeitabschnitt zugeordneten Zwischenbilder insbesondere helle Bildbereiche optimal aufnimmt, wobei die wenigstens eine Bildverarbeitungseinrichtung (51) eine Einrichtung zur Erzeugung eines Ergebnisbildes auf der Grundlage einer Überlagerung dieser Zwischenbilder aufweist.

5. Digitale Filmkamera nach einem der vorstehenden Ansprüche, **dadurch gekennzeichnet, dass** die Mittel zur Beaufschlagung des wenigstens einen Bildsensors (20) ein vor dem Bildsensor positionierbares Verschlussrad (22) aufweisen, welches lichtdurchlässige und lichtundurchlässige Bereichen bzw. Sektoren aufweist und/oder mit Neutraldichtefiltern unterschiedlicher Dichte bestückt ist, wobei das Verschlussrad von der Kamerasteuerungseinheit derart steuerbar und synchronisierbar ist, dass Zwischenbilder mit unterschiedlichen Lichtintensitäten aufgenommen werden können.

6. Digitale Filmkamera nach einem der vorstehenden Ansprüche, **dadurch gekennzeichnet, dass** die Mittel zur Beaufschlagung des Bildsensors (20) einen mechanischen Antrieb (25) zum Verschieben des Bildsensors (22) zwischen den Aufnahmen zweier Zwischenbilder in der Höhe und/oder zur Seite hin um einen vorgebbaren Betrag aufweisen.

7. Digitale Filmkamera nach einem der vorstehenden Ansprüche, **dadurch gekennzeichnet, dass** die wenigstens eine Bildverarbeitungseinrichtung (51) einen Algorithmus umfasst, welcher für dunkle Bildpunkte die für dunkle Bildbereiche optimierten Zwischenbilder, und für helle Bildpunkte die für helle Bildbereiche optimierten Zwischenbilder bevorzugt.

8. Verfahren zur Aufnahme eines Films unter Verwendung einer digitalen Filmkamera, insbesondere einer digitalen Filmkamera nach einem der vorstehenden Ansprüche, wobei Bilder mit einer Bildrate f ermittelt werden, **dadurch gekennzeichnet, dass** während eines der Bildrate f entsprechenden Zeitabschnitts wenigstens zwei Zwischenbilder aufgenommen werden, wobei einzelne und/oder mehrere dieser Zwischenbilder zu einem Ergebnisbild verarbeitet werden, welches weiteren Einrichtungen der Filmkamera, insbesondere einer Einrichtung zur Aufzeichnung der Bilder, einer Sucheranzeige usw. zur Verfügung gestellt wird.

9. Verfahren nach Anspruch 8, **dadurch gekennzeichnet, dass** ein Ergebnisbild durch Mittelwertbildung von wenigstens zwei Zwischenbildern ermittelt wird, wobei ein verwendeter Algorithmus insbesondere eine Gewichtung entsprechend einer Bildpunkthelligkeit oder anderen Parametern vornimmt.
